# EUROPEAN PATENT APPLICATION

(11) **EP 2 320 156 A2**
(43) Date of publication of application: **11.05.2011**
(21) Application number: 10176410.8
(22) Date of filing: 13.09.2010
(51) Int. Cl.: F24J 2/52, F24J 2/54

(54) **Solar array foundation and installation**

(30) Priority: 05.11.2009 US 613252
(71) Applicant: The Boeing Company, Chicago, IL 60606-2016 (US)
(72) Inventor: Ventura, Mark C., Huntington Beach, CA 92647 (US); Cassens, Stephen K., Dallas, TX 72519 (US); Rau, Scott James, Murrieta, CA 92563 (US)
(74) Representative: Howson, Richard G.B.

(57) **Abstract**

Method and system for installing a solar array (106) without utilizing a concrete foundation that supports a mast, wherein a solar array (106) is attached to a helical anchor (110) via a solar tracking mechanism (112). The helical anchor (110) is a one-piece apparatus that is screwed into the ground so that the helical anchor (110) includes an above-ground portion for connection to the solar array (106), and an underground portion that provides the foundation for supporting the solar array. The specific configuration of the helical anchor (110) and a corresponding helical anchor blade (220) may be selected according to soil and environmental characteristics associated with the installation location.

## Description

### Background

There is an ever-increasing focus on the discovery and utilization of alternative energy sources that do not consume natural resources and minimize the impact on the environment. Solar energy technology continues to advance, providing an increasingly efficient means for converting solar energy into electricity. However, a primary issue faced by the solar power industry is the cost of the equipment and the corresponding costs associated with installation of the solar equipment.

A conventional solar power system may include, at a minimum, a solar array attached to a pole or mast that is secured to a foundation. A tracking mechanism used to move the solar array and track the movement of the sun may provide the interface between the solar array and the mast. To secure the mast and corresponding solar array in place, the foundation is typically a concrete pier that is poured into a hole dug into the ground. The mast is then bolted to the foundation to secure the system in place. The electrical system is then connected from a local power source to the solar array, which includes separately grounding the electrical system to ground.

While functional, the conventional solar power system installation described above becomes cumbersome and expensive when applied to large numbers of arrays. The costs associated with the foundations, and specifically with the time required to install the foundations and attach the solar power systems to the foundations, often prohibit solar power from becoming a commercially viable option for many potential applications.

It is with respect to these considerations and others that the disclosure made herein is presented.

### Summary

It should be appreciated that this Summary is provided to introduce a selection of concepts in a simplified form that are further described below in the Detailed Description. This Summary is not intended to be used to limit the scope of the claimed subject matter.

Concepts and technologies described herein provide for a cost-effective method and system for installing a solar array. According to one aspect of the disclosure provided herein, a configuration of a helical anchor to be used for supporting a solar array is selected. The configuration may be selected according to soil conditions and other environmental factors associated with the installation location. The selected helical anchor is screwed into the ground to a depth that provides an underground portion that acts as a foundation, and an above-ground portion to which the solar array is to be attached. A solar tracking mechanism is attached to the solar array and to the top end of the helical anchor to connect the solar array to the helical anchor.

According to another aspect, a solar power system includes a solar array, a solar tracking mechanism, and a one-piece helical anchor. The solar tracking mechanism operates to reposition the solar array to track the movement of the sun. The helical anchor includes an above-ground portion that attaches to the solar tracking mechanism, and an underground portion that has at least one helical anchor blade to assist in screwing the anchor into the ground to provide a secure foundation for the solar array.

According to yet another aspect of the disclosure, a solar power system includes a solar array attached to a solar tracking mechanism. The solar tracking mechanism includes an azimuth drive that operates to rotate the solar array around an azimuth axis, and an elevation drive that operates to rotate the solar array around an elevation axis. The elevation drive is connected to a torque tube member attached to the solar array. The torque tube member is connected via a hinge pin to a stationary member that is attached to the azimuth drive. The torque tube member rotates around the hinge pin to raise and lower the solar array around the elevation axis. The solar tracking mechanism is further attached to an above-ground portion of a one-piece helical anchor. An underground portion of the anchor includes at least one helical anchor blade that assists in screwing the anchor into the ground to provide a secure foundation for the solar array. The helical anchor further acts as a ground rod connection that provides a direct electrical ground through the anchor directly to the surrounding earth.

The features, functions, and advantages that have been discussed can be achieved independently in various embodiments of the present disclosure or may be combined in yet other embodiments, further details of which can be seen with reference to the following description and drawings.

### Brief Description Of The Drawings

FIGURE 1 is a rear perspective view of a solar power system according to various embodiments described herein;
IGURE 2A is a side elevation view of a solar power system showing above-ground and below-ground portions of a helical anchor according to various embodiments presented herein;
FIGURE 2B is an enlarged view of a bottom end of the helical anchor of FIGURE 2A, showing a helical anchor blade according to various embodiments presented herein;
FIGURE 3 is a front elevation view of a helical anchor blade showing further detail with respect to one complete turn of the helical anchor blade according to various embodiments presented herein;
FIGURE 4A is a side elevation view and top view of the helical anchor showing a solar tracker interface according to one embodiment presented herein;
FIGURE 4B is a side elevation view of a top end of the helical anchor showing a solar tracker configured for a pressure fit within the helical anchor according to various embodiments presented herein; and
FIGURE 5 is a flow diagram showing a method for installing a solar power system according to various embodiments presented herein.

### Detailed Description

The following detailed description is directed to methods and systems for installing a solar power system for tracking the movement of the sun. As discussed above, traditional solutions for solar array installation are time consuming and expensive. Conventional installations include digging a hole in the ground for the concrete foundation. Doing so absorbs a significant number of man-hours, particularly if there are a large number of solar arrays being installed. After digging the holes, concrete must be mixed and poured into the holes, along with setting any rebar and pole-mounting bolts into the foundation. Again, this installation step takes a significant amount of time and expense associated with the costs of materials. The poles to which the solar arrays will be mounted are then bolted to the foundations prior to installing the solar arrays onto the poles. Bolting the poles to the foundations again requires a significant number of man-hours. The conventional installation materials and time required to set up a solar power system renders the alternative energy source cost prohibitive for many commercial applications.

Utilizing the concepts and technologies described herein, a solar power system utilizes a helical anchor as the foundation, the mast to which a solar array is attached, and even the electrical ground for the solar power electrical system components. The helical anchor eliminates the need to dig a hole, pour a foundation, and attach a mast to the foundation. Instead, a single helical anchor is screwed into the ground to provide both a foundation and an above-ground mast to which the solar array is attached. The system and installation method described herein reduces the amount of materials needed to install solar power systems, and significantly reduces the number of man-hours required to install the solar power systems. The reduction in materials and installation time substantially decreases the costs associated with installing solar power systems, which in turn increases the commercial practicality of solar power generation systems.

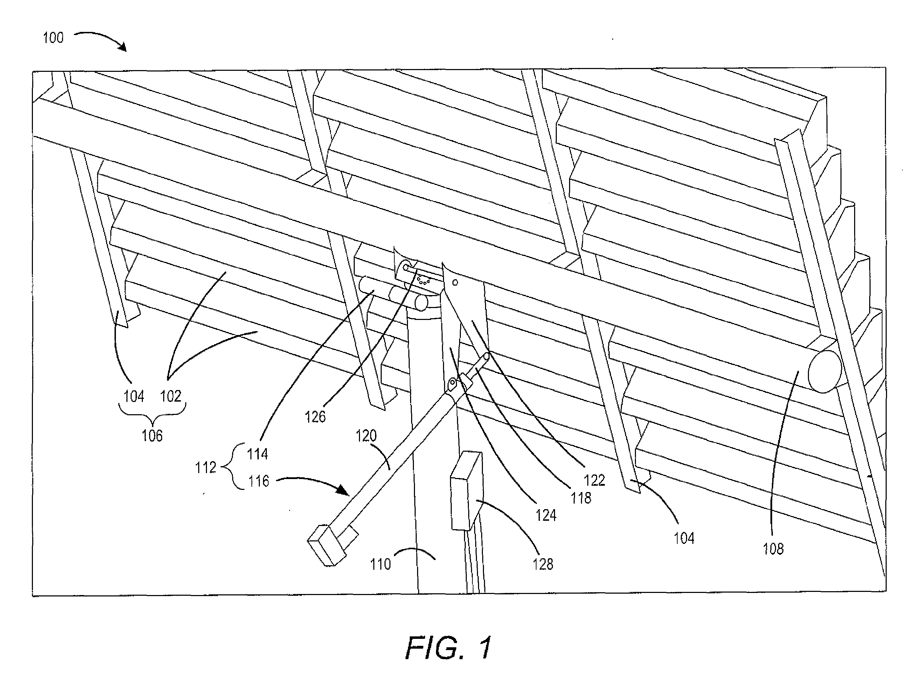

In the following detailed description, references are made to the accompanying drawings that form a part hereof, and which are shown by way of illustration, specific embodiments, or examples. Referring now to the drawings, in which like numerals represent like elements through the several figures, a solar power system and corresponding installation according to the various embodiments will be described. FIGURE 1 shows a partial rear perspective view of a solar power system 100. The solar power system 100 includes a number of solar cells 102 attached to a framework 104 to create a solar array 106. It should be appreciated that although the solar array 106 shown in FIGURE 1 includes three columns of eight solar cells 102 each, any number of solar cells 102 in any configuration may be utilized with the concepts described herein.

The solar array 106 is attached on the rear side to a torque tube 108. The torque tube 108 is used to structurally support the solar array 106, while providing an attachment location for a solar tracking mechanism 112. Conventionally, many solar power systems utilize solar tracking mechanisms to move the corresponding solar arrays in a manner that tracks the movement of the sun in order to increase the power production of the solar cells. Some solar power systems, such as the solar power system 100 shown in FIGURE 1, utilize a two-axis solar tracking mechanism to track the sun. According to this embodiment, an azimuth drive 114 rotates the solar array 106 around a vertical axis, or azimuth axis, while an elevation drive 116 rotates the solar array 106 up and down around an elevation axis.

In the embodiment shown in FIGURE 1, the solar tracking mechanism 112 connects the solar array 106 to a top end of a helical anchor 110. The helical anchor acts as the pole or mast of a conventional solar power system. However, as will be described in detail below, the helical anchor 110 further provides the solar power system 100 with an underground foundation to support the above-ground components of the system. The azimuth drive 114 rotates the solar array 106 around the helical anchor 110 just as a conventional azimuth drive rotates a solar array around a corresponding mast.

The elevation drive 116 of the solar tracking mechanism 112 utilizes a piston 118 to rotate a torque tube member 122 with respect to a stationary member 120 in order to alter the elevation of the solar array 106. The piston 118 is connected to the torque tube member 122 and moves linearly within a cylinder 120, which is connected to a stationary member 124 of the solar tracking mechanism 112. It should be understood that the elevation drive, as well as the azimuth drive, may operate via pneumatic, electric, or hydraulic power, or may alternatively utilize any other type of mechanical, piezoelectric, or electro-mechanical actuator to rotate the torque tube member 122 in relation to the stationary member 124 without departing from the scope of this disclosure.

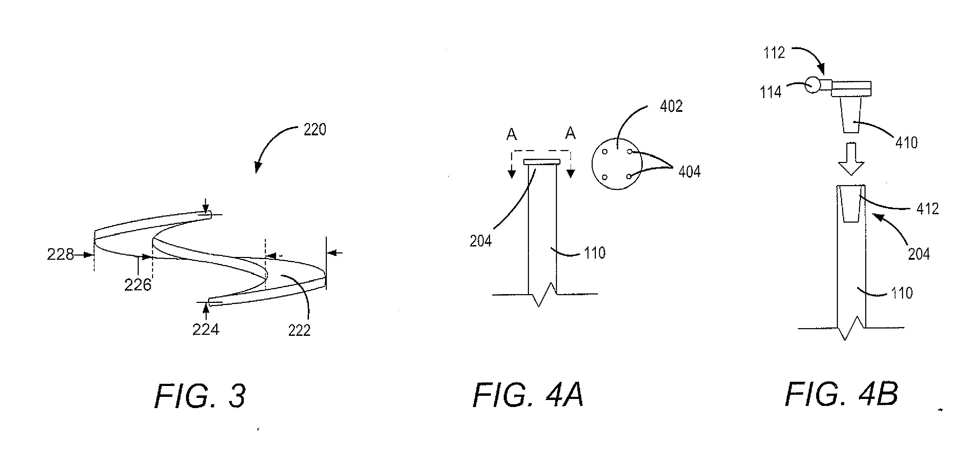

Conventional solar power systems often utilize some type of connecting structure that is attached to the solar array 106 and is then attached to a rotating element such as a hinge. The hinge is then connected to the mast and solar tracking mechanism. In contrast, according to various aspects of this disclosure, the torque tube 108 and corresponding torque tube member 122 becomes one half of the hinge. The torque tube member 122 that is welded, bolted, or otherwise attached to the torque tube 108 is connected to the stationary member 124 of the elevation drive 116 via a hinge pin 126. The hinge pin 126 contains two bearings that support the solar array rotation and associated loads. The stationary member 124 includes or is fixedly attached to a flat member that connects the elevation drive 116 to the azimuth drive 114. The interface between the solar tracking mechanism 112 and the helical anchor 110 will be discussed in detail below with respect to FIGURES 4A and 4B. It should be appreciated that one or more control boxes 128 may be included to transfer power, communications, air, or other power system input and output between the solar array 106, solar tracking mechanism 112, and external power and control sources.

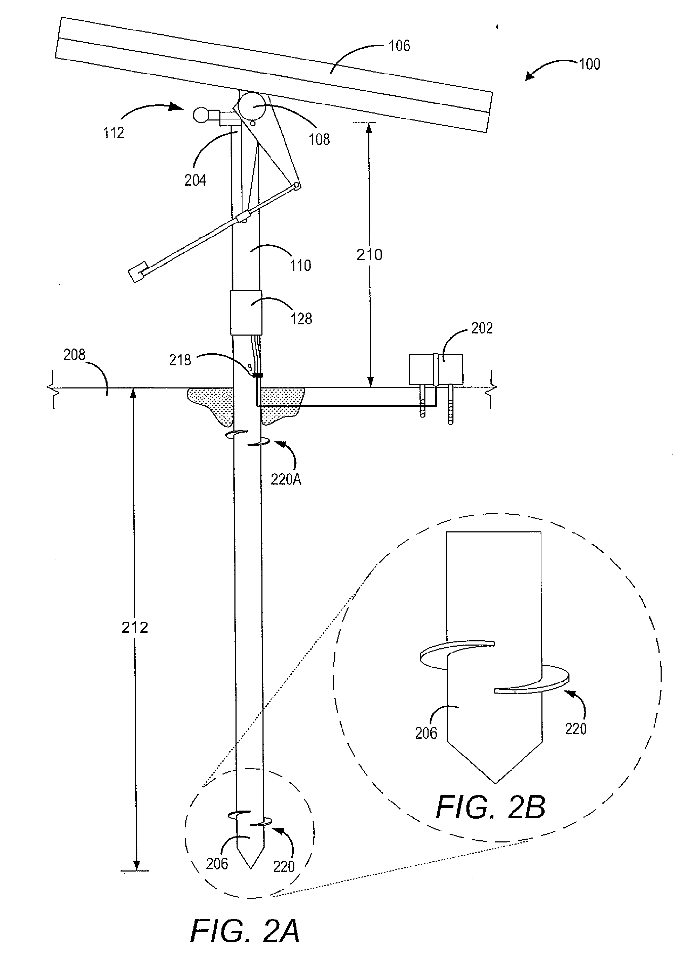

Turning now to FIGURE 2A, a side view of the installed solar power system 100 is shown. It can be seen that the control box 128 is connected to an external supply box 202 that supplies power and/or other control signals to the solar tracking mechanism 112. According to one aspect of this disclosure, the solar power system components are grounded to the helical anchor 110 via the grounding connection 218. Because the helical anchor 110 is manufactured from a conductive material and is screwed directly into the ground 208, the helical anchor 110 provides a convenient ground for all electrical components of the system.

As seen in FIGURE 2A, the helical anchor 110 is a one-piece apparatus that includes an above-ground portion that supports the solar array 106 a height 210 between a top end 204 of the helical anchor 110 and the ground 208. An underground portion of the helical anchor 110 extends a depth 212 between a bottom end 206 of the helical anchor 110 and the surface of the ground 208. This underground portion of the helical anchor 110 replaces the traditional concrete foundation used in common solar power system installations.

Being a one-piece apparatus, the helical anchor 110 is distinguished from any other type of anchoring system that utilizes an underground anchor and an above-ground structure that is then bolted to the underground anchor. By being manufactured from a single shaft that is screwed partially into the ground while presenting an above-ground mast, the helical anchor 110 offers the benefit of requiring fewer parts to manufacture, stock, maintain, and transport, as well as saving installation time since no above ground structure is bolted to the below ground anchor at ground level.

According to one implementation, the height 210 is approximately one half of the depth 212. More specifically, according to one implementation, the helical anchor 110 is approximately 15 feet in length with an above-ground height 210 of 5 feet and an underground depth 212 of 10 feet. According to this implementation, the helical anchor 110 may be manufactured from a steel pipe, be between 6-9 inches in diameter, and have a wall thickness of between 0.25-0.30 inches. This helical anchor 110 could adequately support a rectangular solar array as shown in FIGURE 1 of approximately 8 feet by 18 feet, depending on the soil conditions and the corresponding configuration of the helical anchor 110. It should be understood that the precise characteristics of the helical anchor 110, including the height 210 and depth 212, is dependent at least upon the soil characteristics of the selected installation site, as will be described in greater detail below.

As can be seen in the enlarged view of the bottom end 206 of the helical anchor 110 shown in FIGURE 2B, according to various embodiments, the helical anchor 110 includes at least one helical anchor blade 220. The helical anchor blade 220 is a helical structure that wraps around at least the bottom end 206 of the helical anchor 110 to permit the helical anchor 110 to be screwed into the ground 208. The bottom end 206 may be tapered or pointed, as shown, to facilitate ground penetration. The helical anchor blade 220 may wrap around the helical anchor 110 any number of rotations, including a single rotation, or 360 degrees, as shown in FIGURES 2A and 2B. Alternatively, the helical anchor blade 220 may wrap multiple times around the helical anchor 110 such that a larger percentage of the underground portion of the helical anchor 110 is encompassed by helical anchor blade 220 turns.

As will be described in further detail below, the characteristics of the helical anchor blade 220 and corresponding helical anchor 110 may be dependent on the particular soil conditions of the installation site given the anticipated loads on the helical anchor 110 being installed. As can be seen in FIGURE 2A, according to various implementations, one or more secondary helical anchor blades 220A may be welded or otherwise attached to the helical anchor 110 at a location along the shaft of the anchor that is spaced apart from the helical anchor blade 220 located at the bottom end 206. For example, when soil conditions and/or anticipated wind loads exceed predetermined safety threshold criteria, then a secondary helical anchor blade 220A may be attached to the helical anchor 110 at a location that is approximately one foot below ground level, as shown in FIGURE 2A. Doing so further secures the helical anchor 110 to the ground 208 at a location proximate to the surface to absorb the excess loads and consequently, further reduce deflections of the above-ground portion of the helical anchor 110.

One rotation of the helical anchor blade 220 is shown in FIGURE 3 without the corresponding helical anchor 110. The helical anchor blade 220 has a pitch 224 that is equivalent to the distance along the axis of the helical anchor 110 that is covered by one complete rotation of the helical anchor blade 220. The inside diameter 226 of the helical anchor blade 220 is substantially equivalent to the outside diameter of the helical anchor 110 around which the helical anchor blade 220 is wrapped. The helical anchor blade 220 may be welded or otherwise attached to the helical anchor 110 by any suitable means. The outside diameter 228 of the helical anchor blade 220 is the distance between the outermost edges of the helical anchor blade 220 on opposing sides of the helical anchor 110. The difference between the outside diameter 228 and the inside diameter 226 defines the width of the helical anchor blade 220.

The precise pitch 224, outside diameter 228, number of turns of the helical anchor blade 220, and the depth 212 may depend on the particular soil characteristics of the installation location. For example, loosely packed soil may require a deeper installation, a decreased pitch 224, an increased number of turns of the helical anchor blade 220, one or more additional helical anchor blades 220A, and/or a wider outside diameter 228 than a helical anchor 110 used for compact soil installation. These helical anchor 110 characteristics would not only provide more helical anchor blade 220 surface area for providing a sound foundation for the solar power system 100, but when the helical anchor 110 is screwed into the ground using a hydraulic auger, for example, these helical anchor 110 characteristics operate to compact the soil to further strengthen the foundation of the solar power system 100.

Continuing the sample implementation discussed above with respect to the 15 foot steel helical anchor 110 supporting the 8 foot by 18 foot solar array 106, the helical anchor 110 may include a helical anchor blade 220 having a single turn as shown in FIGURE 3, with the pitch being 3 inches, the inside diameter 226 being 6-9 inches to correspond with the outside diameter of the helical anchor 110, the outside diameter 228 of the helical anchor blade 220 being 14-16 inches, and be manufactured from hot rolled low alloy steel sheet of approximately 0.5 inches thickness. According to various implementations, the outside diameter 228 of the helical anchor blade 220 may be approximately between 150% - 275% of the inside diameter 226 of the helical anchor blade 220.

FIGURES 4A and 4B show two different implementations for providing an interface between the solar tracking mechanism 112 and the helical anchor 110. FIGURE 4A shows a mast cap 402 when viewed along lines A-A at the top end 204 of the helical anchor 110. The mast cap 402 may be a plate of any shape that is welded or otherwise fixedly attached to the top end 204 of the helical anchor 110. According to this implementation, the mast cap 402 has four bolt apertures 404 that mate with corresponding bolt apertures on the solar tracking mechanism 112 for receiving bolts. These bolt apertures 404 may be threaded, or nuts may be used to secure the bolts with the applicable solar power system components.

FIGURE 4B shows an alternative implementation in which the solar tracking mechanism 112, with the attached solar array 106, is secured to the helical anchor 110 without fasteners or welding. In this implementation, the solar tracking mechanism 112 has a tapered portion 410 that fits inside an open top end 204 of the helical anchor 110. The tapered portion 410 of the solar tracking mechanism 112 has a taper that corresponds to an inner tapered portion 412 of the open top end 204 so that it may be easily inserted into the open top end 204 of the helical anchor 110. In this manner, the solar tracking mechanism 112, with the attached solar array 116, may be lowered into the open top end 204 until the tapered portion 410 of the solar tracking mechanism 112 engages the inner tapered portion 412 of the open top tapered end 204 of the helical anchor 110. At this point, the weight of the solar array 106 will press the tapered portion 410 tightly within the helical anchor 110 to secure the solar array 106 in place.

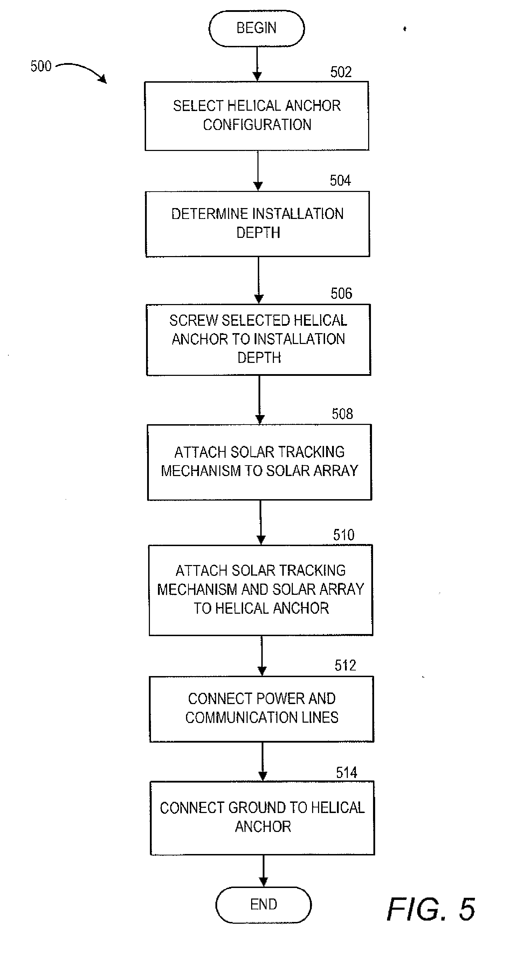

Turning now to FIGURE 5, an illustrative routine 500 for installing a solar array 106 will now be described in detail. It should be appreciated that more or fewer operations may be performed than shown in the figures and described herein. These operations may also be performed in a different order than those described herein. The routine 500 begins at operation 502, where a helical anchor 110 configuration is selected. As described above, this configuration selection is going to depend in part upon the characteristics of the installation location, and particularly of the soil conditions at that location. The number of turns of the helical anchor blade 220, the pitch of the helical anchor blade 220, and the outside diameter 228 of the helical anchor blade 220 may all be factors that are dependent upon the soil characteristics.

Known soil analysis techniques may be used to determine the characteristics of the soil at the installation location. Based on this analysis, any number of helical anchor features discussed above may be selected and utilized to predict the load bearing capacity of the selected helical anchor. This predicted load-bearing capacity may be compared with the predicted loads to be experienced by the helical anchor 110 at that location to determine if the selected anchor configuration is acceptable. If not, further engineering analysis may be performed utilizing various anchor characteristics until a configuration of the helical anchor 110 that meets all predicted load-bearing requirements has been selected.

The helical anchor 110 configuration may also include material considerations. For example, depending on the environmental conditions to which the solar power system 100 will be exposed, the type of material used to manufacture the helical anchor 110 and corresponding helical anchor blade 220, the outside diameter of the helical anchor 110 and inside diameter 226 of the helical anchor blade 220, the thickness of the material, and the total length of the helical anchor 110 may change. To decrease the material and installation costs, the least robust helical anchor 110 configuration may be selected that will sustain safe operations of the solar power system 100 according to the environmental conditions at the specific installation location.

Returning to FIGURE 5, the routine 500 continues from operation 502 to operation 504, where the installation depth 212 is determined. As with the selection of the helical anchor 110 configuration, the depth 212 is dependent upon soil and environmental conditions at the installation site. If the solar power system 100 is to be subjected to large wind loads with relatively loose soil conditions, then the depth 212 would be greater than if the solar power system 100 is to be subjected to very light wind loads and compact soil. Structural analysis of the loads to carried by the helical anchor 110 can be used to select an acceptable installation depth 212.

From operation 504, the routine 500 continues to operation 506, where the selected helical anchor 110 is screwed into the ground 208 at the installation location to the proper installation depth 212. The solar tracking mechanism 112 is bolted or otherwise attached to the solar array 106 at operation 508. The routine 500 continues from operation 508 to operation 510, where the solar tracking mechanism 112, with the attached solar array 106, is attached to the helical anchor 110. As described above with respect to FIGURE 4A, this may occur by bolting the solar tracking mechanism 112 to a mast cap 402 attached to the top end 204 of the helical anchor 110. Alternatively, as described above with respect to FIGURE 4B, the solar tracking mechanism 112 may include a tapered portion 410 that is inserted into an open top end 204 of the helical anchor 110 until frictionally engaged and secured in place by the weight of the solar array 106.

At operation 512, the power and communication wires are connected between the control box 128 and the external supply box 202, and to the applicable components of the solar power system 100. This operation may include the connection of any applicable air or hydraulic lines if utilized by the solar tracking mechanism 112 as described above. This operation may also include connecting the solar tracking mechanism 112 to a controller that provides the appropriate control signal input to the solar tracking mechanism in order to accurately track the movement of the sun. The controller may be within the control box 128, the external supply box 202, or may be a part of the solar tracking mechanism 112. The ground wires are connected to the grounding connection 218 of the helical anchor 110 to ground the electrical components of the solar power system at operation 514, and the routine 500 ends.

From the description provided herein, it should be clear that the helical anchor 110 and corresponding method of installation provides a significant reduction in the amount of time and money required to install solar power systems. Rather than utilizing concrete foundations and bolts to secure a mast to the foundation, the helical anchor 110 described herein allows for a simplified installation that includes merely screwing the appropriate anchor in the ground. Not only does this process save installation time, but the reduction in the required materials also saves money in manufacturing, storing, maintaining, and transporting those materials to the installation sites. Reducing the time and costs associated with solar power systems and corresponding installations of these systems will advance the use of solar power as an alternative energy source as these systems become commercially viable for a larger number of energy applications.

The subject matter described above is provided by way of illustration only and should not be construed as limiting. Various modifications and changes may be made to the subject matter described herein without following the example embodiments and applications illustrated and described, and without departing from the true spirit and scope of the present disclosure, which is set forth in the following claims.

## Claims

1. A method for installing a solar power system, the method comprising:
selecting a helical anchor configuration;
screwing a helical anchor having the helical anchor configuration into soil at an installation location to an installation depth such that a top end of the helical anchor protrudes from the soil to a height at which a solar array will be attached;
attaching a solar tracking mechanism to the solar array; and
attaching the solar tracking mechanism and the solar array to the top end of the helical anchor.

2. The method of claim 1, wherein selecting the helical anchor configuration comprises:
determining soil characteristics at the installation location; and
selecting the helical anchor configuration according to soil characteristics at the installation location.

3. The method of claim 2, wherein selecting the helical anchor configuration according to soil characteristics at the installation location comprises:
determining a number of helical anchor blades according to the soil characteristics
determining a number of turns of a helical anchor blade according to the soil characteristics;
determining a pitch of the helical anchor blade according to the soil characteristics;
determining an outside diameter of the helical anchor blade according to the soil characteristics; and
selecting the helical anchor having the determined number of helical anchor blades, number of helical anchor blade turns, helical anchor blade pitch, and helical anchor blade outside diameter.

4. The method of claim 1, further comprising determining the installation depth for a helical anchor according to the soil characteristics and projected wind loads at the installation location.

5. The method of claim 4, wherein the installation depth is approximately twice the height that at which the solar array will be attached.

6. The method of claim 1, wherein screwing the helical anchor having the helical anchor configuration into the soil at the installation location to the installation depth comprises utilizing a hydraulic auger to rotate the helical anchor such that a helical anchor blade engages the soil and drives the helical anchor downward to the installation depth.

7. The method of claim 1, further comprising:
connecting the solar tracking mechanism to a power supply; and
connecting the solar tracking mechanism to a controller operative to control the solar tracking mechanism to track movement of the sun with the solar array.

8. The method of claim 7, further comprising connecting electrical components of the solar power system to a grounding connection of the helical anchor such that the helical anchor acts as the electrical ground for the solar power system.

9. The method of claim 1, wherein the solar tracking mechanism comprises:
an azimuth drive operative to rotate the solar array around an azimuth axis; and
an elevation drive, wherein the elevation drive is connected to a torque tube member fixedly attached to the solar array and is rotatably connected to a stationary member fixedly attached to the azimuth drive via a hinge pin, and wherein the elevation drive is operative to rotate the torque tube member around the hinge pin to rotate the solar array around an elevation axis.

10. The method of claim 9, wherein attaching the solar tracking mechanism to the solar array comprises bolting the stationary member to the azimuth drive and installing the hinge pin.

11. The method of claim 1, wherein attaching the solar tracking mechanism and the solar array to the top end of the helical anchor comprises bolting the solar tracking mechanism to a mast cap fixedly attached to the top end of the helical anchor.

12. The method of claim 1, wherein attaching the solar tracking mechanism and the solar array to the top end of the helical anchor comprises attaching the solar tracking mechanism and the solar array to the top end of the helical anchor without using fasteners or welding.

13. The method of claim 12, wherein attaching the solar tracking mechanism and the solar array to the top end of the helical anchor comprises inserting a tapered portion of the solar tracking mechanism within the top end of the helical anchor until the tapered portion of the solar tracking mechanism engages an inner tapered portion of the top end of the helical anchor to secure the solar tracking mechanism to the helical anchor.

14. A solar power system, comprising:
a solar array;
a solar tracking mechanism attached to the solar array and operative to reposition the solar array to track movement of the sun, the solar tracking mechanism comprising
an azimuth drive operative to rotate the solar array around an azimuth axis, and
an elevation drive, wherein the elevation drive is connected to a torque tube member fixedly attached to the solar array and is rotatably connected to a stationary member fixedly attached to the azimuth drive via a hinge pin, and wherein the elevation drive is operative to rotate the torque tube member around the hinge pin to rotate the solar array around an elevation axis; and
a one-piece helical anchor comprising
an above-ground anchor portion configured for attachment to the solar tracking mechanism,
an underground anchor portion comprising at least one helical anchor blade, and
a grounding connection configured to ground electrical components of the solar power system through the one-piece helical anchor.
